# EUROPEAN PATENT SPECIFICATION

(11) **EP 3 541 201 B1**
(45) Date of publication and mention of the grant of the patent: **20.07.2022**
(21) Application number: 17872421.7
(22) Date of filing: 15.11.2017
(51) Int. Cl.: A23L 2/02, A23L 2/38, A23L 2/52, A23L 2/56, A23L 2/60, A23L 27/30, A23L 33/10, A23L 33/105, A23L 2/06, A23L 27/29, A23L 27/00

(54) **TASTE IMPROVEMENT FOR STEVIA SWEETENED BEVERAGES WITH MIRACLE FRUIT**
GESCHMACKVERBESSERUNG FÜR MIT STEVIA GESÜSSTE GETRÄNKE MIT WUNDERFRÜCHTEN
AMÉLIORATION DU GOÛT POUR DES BOISSONS AU FRUIT MIRACLE ÉDULCORÉES AVEC DE LA STEVIA

(30) Priority: 16.11.2016 US 201662423158 P
(43) Date of publication of application: 25.09.2019
(73) Proprietor: The Coca-Cola Company, Atlanta, GA 30313 (US)
(72) Inventor: HIGIRO, Juvenal, Atlanta, GA 30313 (US); TAN, Xiaoliang, Marietta, GA 30068 (US); CHEN, You, Atlanta, GA 30313 (US)
(74) Representative: Dehns
(86) International application number: PCT/US2017/061786
(87) International publication number: WO 2018/093890

(56) References cited:
- WO-A1-2012/078130
- CN-A- 104 431 061
- CN-A- 105 942 056
- US-A- 3 920 815
- US-A- 3 920 815
- US-A1- 2006 286 259
- US-A1- 2011 144 218
- US-A1- 2011 144 218
- US-A1- 2013 171 316
- US-A1- 2014 335 246
- US-A1- 2015 174 015
- US-A1- 2015 237 898
- US-A1- 2015 320 101
- Anonymous: "BioResources International: Miraculin Data Sheet", , 1 January 2005 (2005-01-01), XP055684245, Retrieved from the Internet: URL:http://miraculin.com/miraculin_sheet.h tm [retrieved on 2020-04-08]
- RODRIGUES JÉSSICA FERREIRA ET AL: "Miracle fruit: An alternative sugar substitute in sour beverages", APPETITE, ACADEMIC PRESS, NEW YORK, NY, US, vol. 107, 13 September 2016 (2016-09-13), pages 645-653, XP029808724, ISSN: 0195-6663, DOI: 10.1016/J.APPET.2016.09.014
- SARDESAI V M ET AL: "Natural and synthetic intense sweeteners", THE JOURNAL OF NUTRITIONAL BIOCHEMISTRY, ELSEVIER, AMSTERDAM, NL, vol. 2, no. 5, 1 May 1991 (1991-05-01), pages 236-244, XP023556780, ISSN: 0955-2863, DOI: 10.1016/0955-2863(91)90081-F [retrieved on 1991-05-01]

## Description

### FIELD OF THE INVENTION

The principles of the present invention relate generally to enhancing the taste of stevia sweetened beverages using miracle fruit.

### BACKGROUND OF THE INVENTION

Stevia is a no calorie sweetener that is extracted from the leaves of the plant species *Stevia rebaudiana.* However, common problems associated with the use of stevia and stevia based products as a sweetener are a bitterness and lingering aftertaste. These problems can be even more problematic when the stevia sweetener is used at higher concentrations. Because of the bitterness and lingering aftertaste associated with stevia use, there has been a barrier to a broader application of stevia in zero or low calorie beverages. Consumers have often criticized beverages sweetened with stevia because of the bitterness and after tastes issues. Some have attempted to address the bitterness and lingering aftertaste issues using flavor modulators, but most flavor modulators are expensive and tend to change the flavor profile of the beverage, even when used at low concentrations. Additionally, many of these flavor modulators are artificial, which makes them unfavorable to certain consumers.

Miracle fruit or miracle berry is a plant, *Synsepalum dulcificum,* found in West Africa. The pulp of the miracle fruit contains a protein known as "miraculin," which has the ability to bind to taste receptors on the human tongue, thereby causing humans to perceive sour or bitter foods as tasting sweet. Miracle fruit tablets are commercially available as supplements in some regions. Such miracle fruit tablets are chewed by consumers before consuming sour or bitter beverages or foods. The consumer then experiences those sour beverages or foods as tasting sweet. However, when consuming the tablets, consumers often experience perceiving everything as tasting sweet for several hours after consuming the tablets, which is generally undesirable.

In order for stevia-sweetened beverages to become more widely accepted and enjoyed by larger groups of consumers, there is a need for a natural modulator that will reduce or eliminate the bitterness and lingering aftertaste without impacting the flavor profile of beverages sweetened with stevia.

CN 104431061 discloses a blood sugar-lowering and slimming tea, and a production method thereof. US 2015/237898 discloses sweetener compositions which have particular glycoside blends comprising any or all of rebaudioside A, rebaudioside B, and rebaudioside D together with stevioside in various proportions. US 2014/335246 discloses a natural sweetener composition comprising a blend of Stevioside extract and Rebaudioside A extract. Rodrigues et al., "Miracle fruit: An alternative sugar substitute in sour beverages", Appetite, 107, 2016, 645-653 discloses a study which characterizes the temporal profile of miracle fruit and assesses its sugar substitute power in sour beverages.

### BRIEF SUMMARY OF THE INVENTION

One aspect of the present disclosure is the provision of compositions containing rebaudioside A, miracle fruit pulp powder, and a beverage, wherein the miracle fruit pulp powder is 0.005 wt% to 2 wt% of the composition. In certain embodiments, the beverage may be a soda, flavored water (still or carbonated), tea, coffee, or fruit juice. Other beverages are contemplated.

Another aspect of the present disclosure is the provision of a method of making a stevia sweetened miracle fruit beverage. The method includes supplying a beverage, supplying miracle fruit pulp powder, supplying rebaudioside A and combining the beverage, miracle fruit pulp powder, and rebaudioside A to produce a stevia sweetened miracle fruit beverage, wherein the miracle fruit pulp powder is 0.005 wt% to 2 wt% of the composition. In certain embodiments, the method may further include dissolving the miracle fruit pulp powder in water before supplying the miracle fruit pulp powder. In further embodiments of the method, the beverage may be a soda, flavored water (still or carbonated), tea, coffee, or fruit juice.

A person of ordinary skill in the art would understand that the concentrations of the various components can vary depending on the addition, substitution, and/or subtraction of ingredients in a given composition.

### DETAILED DESCRIPTION OF THE INVENTION

One aspect of the present disclosure is the provision of compositions containing rebaudioside A, miracle fruit pulp powder, and a beverage, and methods of making the same. The miracle fruit pulp powder is 0.005 wt% to 2 wt% of the composition.

According to certain embodiments, the composition can include further stevia compounds or derivatives.

The use of stevia based sweeteners is favored by certain groups of consumers, including those desiring more natural-based sweeteners and those seeking a low glycemic diet. Stevia does not induce a glycemic response when ingested, thus making stevia a favorable sweetener for diabetics and those on carbohydrate controlled diets. Beverages produced in accordance with embodiments described herein may be favored by consumers seeking a low glycemic or low carbohydrate diet, consumers who are diabetic, and those who are seeking to control their caloric consumption. Beverages in accordance with certain embodiments may be diet beverages, weight loss beverages, low carbohydrate beverages, diabetic beverages, and dietary supplement beverages.

In particular embodiments, the beverage can be selected from any beverage that could be sweetened with stevia. Such beverages include flavored waters (both still and carbonated), sodas, fruit juice, coffees, and teas. The fruit juices can be any fruit juices, including smoothies, citrus fruit juice (such as orange juice, lemon juice, lime juice, kumquat juice, tangerine juice, grapefruit juice, and combinations thereof), berry based fruit juices, cranberry juice, and so forth.

The concentrations of rebaudioside A and miracle fruit pulp powder may be different for different beverages. A person of skill in the art may understand how to select appropriate concentrations of rebaudioside A and miracle fruit pulp powder to achieve a desired taste perception for consumers. Such desired taste perceptions will include perceiving the beverage as tasting sweet while not experiencing the lingering bitterness and aftertaste typically associated with rebaudioside A. Additionally, according to some embodiments, the consumer does not experience a lingering impact oftentimes associated with miracle fruit tablet consumption, i.e., the consumer will not perceive items consumed after the beverage has been consumed as tasting sweet, as a result of an appropriate concentration of the miracle fruit pulp powder relative to the rebaudioside A.

The final concentration of miracle fruit pulp powder ranges from 0.005% to 2.0% by weight of the final product. In further embodiments, the desired final concentration of miracle fruit pulp powder may range from 0.005% to 0.01% of the final product. In further embodiments, the desired final concentration of miracle fruit pulp powder may range from 0.01% to 0.2% of the final product. In further embodiments, the desired final concentration of miracle fruit pulp powder may range from 0.5% to 1.0% of the final product. In further embodiments, the desired final concentration of miracle fruit pulp powder may range from 1.0% to 1.5% of the final product. In further embodiments, the desired final concentration of miracle fruit pulp powder may range from 1.5% to 2.0% of the final product. In some embodiments, the concentration of miracle fruit pulp powder may be about 0.005% of the final product. In some embodiments, the concentration of miracle fruit pulp powder may be about 0.01% of the final product. In some embodiments, the concentration of miracle fruit pulp powder may be about 0.02% of the final product. In some embodiments, the concentration of miracle fruit pulp powder may be about 0.03% of the final product. In some embodiments, the concentration of miracle fruit pulp powder may be about 0.04% of the final product. In some embodiments, the concentration of miracle fruit pulp powder may be about 0.05% of the final product. In some embodiments, the concentration of miracle fruit pulp powder may be about 0.06% of the final product. In some embodiments, the concentration of miracle fruit pulp powder may be about 0.07% of the final product. In some embodiments, the concentration of miracle fruit pulp powder may be about 0.08% of the final product. In some embodiments, the concentration of miracle fruit pulp powder may be about 0.09% of the final product. In some embodiments, the concentration of miracle fruit pulp powder may be about 0.1% of the final product. In some embodiments, the concentration of miracle fruit pulp powder may be about 0.2% of the final product. In some embodiments, the concentration of miracle fruit pulp powder may be about 0.3% of the final product. In some embodiments, the concentration of miracle fruit pulp powder may be about 0.4% of the final product. In some embodiments, the concentration of miracle fruit pulp powder may be about 0.5% of the final product. In some embodiments, the concentration of miracle fruit pulp powder may be about 0.6% of the final product. In some embodiments, the concentration of miracle fruit pulp powder may be about 0.7% of the final product. In some embodiments, the concentration of miracle fruit pulp powder may be about 0.8% of the final product. In some embodiments, the concentration of miracle fruit pulp powder may be about 0.9% of the final product. In some embodiments, the concentration of miracle fruit pulp powder may be about 1.0% of the final product. In some embodiments, the concentration of miracle fruit pulp powder may be about 1.1% of the final product. In some embodiments, the concentration of miracle fruit pulp powder may be about 1.2% of the final product. In some embodiments, the concentration of miracle fruit pulp powder may be about 1.3% of the final product. In some embodiments, the concentration of miracle fruit pulp powder may be about 1.4% of the final product. In some embodiments, the concentration of miracle fruit pulp powder may be about 1.5% of the final product. In some embodiments, the concentration of miracle fruit pulp powder may be about 1.6% of the final product. In some embodiments, the concentration of miracle fruit pulp powder may be about 1.7% of the final product. In some embodiments, the concentration of miracle fruit pulp powder may be about 1.8% of the final product. In some embodiments, the concentration of miracle fruit pulp powder may be about 1.9% of the final product. In some embodiments, the concentration of miracle fruit pulp powder may be about 2.0% of the final product. Although the percentages provided above are expressed in "by weight" values, one of ordinary skill in the art would understand that the percentages may be determined and expressed in "by volume" values.

In further embodiments, the desired final concentration of miracle fruit pulp powder may range from 0.05% to 1% of the final product. In further embodiments, the desired final concentration of miracle fruit pulp powder may range from 0.025% to 0.05% of the final product. In further embodiments, the desired final concentration of miracle fruit pulp powder may range from 1.0% to 2.0% of the final product.

According to embodiments described herein, the miracle fruit component contains miraculin. Various sources of miracle fruit are available.

In some embodiments, the miracle fruit component may be a miracle fruit pulp powder that is obtained by freeze-drying miracle fruit pulp. In such embodiments, the miracle fruit component is obtained by dissolving the miracle fruit pulp powder in a liquid (such as water, fruit juice, or other selected beverage or liquid) to produce a liquid phase containing miraculin. The resulting liquid phase may then be added to the stevia sweetened beverage. In further embodiments, the resulting liquid phase may be added to the beverage before rebaudioside A is added to the beverage. In some embodiments, particulates or solids may be removed using known methods, such as centrifuging, from the liquid phase before it is added to the beverage. The resulting rebaudioside A sweetened miracle fruit beverage is then perceived by the consumer as lacking the bitter and lingering after taste typically associated with stevia. Moreover, the rebaudioside A sweetened miracle fruit beverage may be perceived by the consumer as being sweeter without the added calories of an additional sweetener, such as sugar, or other calorie-laden sweeteners. Additionally, in yet further embodiments, the consumer does not experience a continued sweetened taste related to the miracle fruit pulp powder after consuming the composition that is typically experienced by an individual consuming miracle fruit tablets.

Another aspect of the present disclosure is the provision of a method of making a stevia sweetened miracle fruit beverage. The process may include supplying a beverage, supplying a miracle fruit pulp powder, supplying rebaudioside A and combining the beverage, miracle fruit pulp powder, and rebaudioside A to produce a stevia sweetened miracle fruit beverage. The order of addition of the various components may be varied based on the beverage selected. In some embodiments, the process may further include dissolving the miracle fruit pulp powder in water or other liquid before the step of supplying the miracle fruit pulp powder. In yet further embodiments, the miracle fruit pulp powder may be added directly to the beverage.

Embodiments may achieve satisfactory taste modulation on stevia sweetened beverages without a change in the flavor profile that otherwise characterizes most flavor modulators. Additionally, the compositions described herein do not require consumers to chew the miracle fruit tablet, and, according to certain embodiments, the consumers do not experience the lingering sweet taste perception typically experienced by consumers after consuming a miracle fruit tablet.

In some embodiments, numbers expressing quantities of ingredients, properties, such as molecular weight, reaction conditions, and so forth, used to describe and claim certain embodiments of the present disclosure are to be understood as being modified in some instances by the term "about." In some embodiments, the term "about" is used to indicate that a value includes the standard deviation of the mean for the device or method being employed to determine the value. In some embodiments, the numerical parameters set forth in the written description and attached claims are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the present disclosure are approximations, the numerical values set forth in the specific examples are reported as precisely as practicable. The numerical values presented in some embodiments of the present disclosure may contain certain errors necessarily resulting from the standard deviation found in their respective testing measurements. The recitation of ranges of values herein is merely intended to serve as a shorthand method of referring individually to each separate value falling within the range. Unless otherwise indicated herein, each individual value is incorporated into the specification as if it were individually recited herein.

In some embodiments, the terms "a" and "an" and "the" and similar references used in the context of describing a particular embodiment (especially in the context of certain of the following claims) can be construed to cover both the singular and the plural, unless specifically noted otherwise. In some embodiments, the term "or" as used herein, including the claims, is used to mean "and/or" unless explicitly indicated to refer to alternatives only or the alternatives are mutually exclusive.

The terms "comprise," "have" and "include" are open-ended linking verbs. Any forms or tenses of one or more of these verbs, such as "comprises," "comprising," "has," "having," "includes" and "including," are also open-ended. For example, any method that "comprises," "has" or "includes" one or more steps is not limited to possessing only those one or more steps and can also cover other unlisted steps. Similarly, any composition or device that "comprises," "has" or "includes" one or more features is not limited to possessing only those one or more features and can cover other unlisted features.

All methods described herein can be performed in any suitable order unless otherwise indicated herein or otherwise clearly contradicted by context. The use of any and all examples, or exemplary language (e.g., "such as") provided with respect to certain embodiments herein is intended merely to better illuminate the present disclosure and does not pose a limitation on the scope of the present disclosure otherwise claimed. No language in the specification should be construed as indicating any non-claimed element essential to the practice of the present disclosure.

Groupings of alternative elements or embodiments of the present disclosure disclosed herein are not to be construed as limitations. Each group member can be referred to and claimed individually or in any combination with other members of the group or other elements found herein. One or more members of a group can be included in, or deleted from, a group for reasons of convenience or patentability. When any such inclusion or deletion occurs, the specification is herein deemed to contain the group as modified thus fulfilling the written description of all Markush groups used in the appended claims.

### EXAMPLES

The following non-limiting examples are provided to further illustrate the present disclosure. It should be appreciated by those of skill in the art that the techniques disclosed in the examples that follow represent approaches the inventors have found function well in the practice of the present disclosure, and thus can be considered to constitute examples of modes for its practice.

### Example 1: Compound preparation

Miracle fruit pulp powder from fresh crop was ordered from Miracle Fruit Farm located in Miami, Florida. To prepare the miracle fruit component containing miraculin, a 10% solution of the freeze-dried powder was made using filtered water at ambient temperature. The solution was agitated for 1 hour. After 1 hour, the solution was thick, but pourable. The solution was then centrifuged using a Beckman Coulter Allegra 25R centrifuge, at 3600 RPM for 5 minutes with temperature control at ambient temperature. The resulting supernatant containing miraculin was then collected.

### Example 2: Mock beverage preparation

The following Table 1 shows the ingredients and their corresponding amounts in the mock beverage samples that were prepared using the supernatant prepared in Example 1. Rebaudioside-A (2:95% purity) was used to sweeten the beverages as shown in Table 1.

**Table 1. Mock Beverage Samples**

| **Ingredients** | **Control Sample Amount (g)** | **Test Sample 1 Amount (g)** | **Test Sample 2 Amount (g)** | **Test Sample 3 Amount (g)** |
|---|---|---|---|---|
| Filtered water | 99.81 | 99.56 | 99.31 | 99.06 |
| Citric acid Sodium | 0.117 | 0.117 | 0.117 | 0.117 |
| citrate | 0.027 | 0.027 | 0.027 | 0.027 |
| Miracle fruit component | - | 0.25 | 0.5 | 0.75 |
| Reb-A | 0.05 | 0.05 | 0.05 | 0.05 |
| TOTAL | 100g | 100g | 100g | 100g |

The miracle fruit component amounts in Test Samples 1, 2, and 3 correspond to 2,500 ppm, 5,000 ppm, and 7,500 ppm of the powder, respectively.

The following Table 2 shows the ingredients and their corresponding amounts in the mock enhanced water samples.

**Table 2. Enhanced Water Samples**

| **Ingredients** | **Control Sample Amount (g)** | **Test Sample 1 Amount (g)** | **Test Sample 2 Amount (g)** | **Test Sample 3 Amount (g)** |
|---|---|---|---|---|
| Filtered water | 99.675 | 99.55 | 99.525 | 99.5 |
| Citric acid | 0.096 | 0.096 | 0.096 | 0.096 |
| Ascorbic acid | 0.045 | 0.045 | 0.045 | 0.045 |
| Mineral & vitamin premix | 0.047 | 0.047 | 0.047 | 0.047 |
| Natural color | 0.068 | 0.068 | 0.068 | 0.068 |
| Natural berry flavor | 0.049 | 0.049 | 0.049 | 0.049 |
| Reb-A | 0.019 | 0.019 | 0.019 | 0.019 |
| Miracle fruit component | - | 0.125 | 0.15 | 0.175 |
| TOTAL | 100g | 100g | 100g | 100g |

The miracle fruit component amounts in Test Samples 1, 2, and 3 correspond to 1,250 ppm, 1,500 ppm, and 1,750 ppm of the powder, respectively.

The miracle fruit component was added to the mock beverage and enhanced water samples and stirred for 30 minutes. The beverages were filled in 400 ml-PET bottles. The beverages were pasteurized using in-bottle pasteurization using a Miele Professional^{®} (Miele, Princeton, NJ) washer with temperature and time control at 80°C for 15 minutes. The mock beverage and mock enhanced water samples were then cooled down being stored in a refrigerator.

### Example 3: Sensory Evaluation of stevia sweetened beverages with miracle fruit

The beverages prepared in Example 2 were evaluated blindly by an expert panel of six individuals. Cold samples were coded and randomly presented to the panelists in 100 ml-opaque cups. Panelists were instructed to eat an unsalted cracker and rinse their mouth with mineral water before and in between samples. For each sample, panelists were instructed to take three sips, then write down their evaluation comments. The control sample was tasted first, followed by the test samples.

**Table 3. Mock Beverage with Miracle Fruit**

| **Mock Beverage Samples** | **Reb-A (ppm)** | **Concentration of Miracle fruit in Beverage (ppm)** | **Panelists Comments** |
|---|---|---|---|
| Control Sample | 500 | - | Too much sweet lingering and bitter aftertaste |
| Test Sample 1 | 500 | 2,500 | Sweet lingering and bitterness are slightly reduced compared to the control |
| Test Sample 2 | 500 | 5,000 | Sweet linger and bitter aftertaste are much reduced, preferred by panelists |
| Test Sample 3 | 500 | 7,500 | Sweet linger and bitter aftertaste reduction but there is presence of berry notes |

**Table 4. Enhanced Water with Miracle Fruit**

| **Enhanced Water Samples** | **Reb-A (ppm)** | **Concentration of Miracle fruit in Beverage (ppm)** | **Panelists Comments** |
|---|---|---|---|
| Control Sample | 190 | - | Too much sweet linger and bitter aftertaste |
| Test Sample 1 | 190 | 1,250 | Sweet lingering and bitterness are slightly reduced compared to the control |
| Test Sample 2 | 190 | 1,500 | Sweet linger and bitter aftertaste are much reduced, preferred by panelists |
| Test Sample 3 | 190 | 1,750 | Sweet linger and bitter aftertaste reduction but the overall flavor profile changed |

The panelists' comments above on both the mock beverage samples and the enhanced water samples demonstrate that the miracle fruit component improved the stevia-sweetened beverages by reducing the sweet linger and the bitter aftertaste, which are attributes most disliked by consumers. Additionally, no consumers reported lingering perceived sweetness that is typically associated with consuming miracle fruit tablets. Notably, for both the mock beverage and mock enhanced water, the expert panel preferred the middle concentration of miracle fruit, thus showing an optimization of concentration of miracle fruit can be achieved such that consumers experience the benefits of perceived sweetness of the miracle fruit extract, without the bitterness and lingering aftertaste associated with stevia and also without lingering perceived sweetness as is typical of miracle fruit tablets.

## Claims

1. A composition comprising:
rebaudioside A;
miracle fruit pulp powder;
and a beverage,
wherein the miracle fruit pulp powder is 0.005 wt% to 2 wt% of the composition.

2. The composition of claim 1, wherein the beverage is selected from soda, flavored water, tea and coffee.

3. The composition of claim 1, wherein the beverage comprises fruit juice.

4. The composition of claim 3, wherein the fruit juice is selected from orange juice, lemon juice, lime juice, kumquat juice, tangerine juice, grapefruit juice, and combinations thereof.

5. The composition of any one of the preceding claims, wherein the miracle fruit pulp powder is 0.005 wt% to 0.2 wt% of the composition.

6. The composition of claim 5, wherein the miracle fruit pulp powder is 0.005 wt% to 0.01 wt% of the composition.

7. The composition of claim 5, wherein the miracle fruit pulp powder is 0.01 wt% to 0.2 wt% of the composition.

8. The composition of claim 7, wherein the miracle fruit pulp powder is 0.025 wt% to 0.05 wt% of the composition.

9. A method of making a stevia sweetened miracle fruit beverage, the method comprising:
supplying a beverage;
supplying miracle fruit pulp powder;
supplying rebaudioside A; and
combining the beverage, miracle fruit pulp powder, and rebaudioside A to produce a stevia sweetened miracle fruit beverage,
wherein the miracle fruit pulp powder is 0.005 wt% to 2 wt% of the composition.

10. The method of claim 9 comprising dissolving the miracle fruit pulp powder in water before supplying the miracle fruit pulp powder.

11. The method of claim 9 wherein the beverage is selected from soda, flavored water, tea, coffee, fruit juice, and combinations thereof.

12. The method of any one of claims 9-11, wherein the miracle fruit pulp powder is 0.005 wt% to 0.2 wt% of the composition.

13. The method of claim 12, wherein the miracle fruit pulp powder is 0.005 wt% to 0.01 wt% of the composition.

14. The method of claim 12, wherein the miracle fruit pulp powder is 0.01 wt% to 0.2 wt% of the composition.

15. The method of claim 14, wherein the miracle fruit pulp powder is 0.025 wt% to 0.05 wt% of the composition.

## Patentansprüche

1. Zusammensetzung, umfassend:
Rebaudiosid A;
Wunderfruchtfleischpulver;
und ein Getränk,
wobei das Wunderfruchtfleischpulver 0,005 Gew.-% bis 2 Gew.-% der Zusammensetzung ausmacht.

2. Zusammensetzung nach Anspruch 1, wobei das Getränk ausgewählt ist aus Erfrischungsgetränk, aromatisiertem Wasser, Tee und Kaffee.

3. Zusammensetzung nach Anspruch 1, wobei das Getränk Fruchtsaft umfasst.

4. Zusammensetzung nach Anspruch 3, wobei der Fruchtsaft ausgewählt ist aus Orangensaft, Zitronensaft, Limettensaft, Kumquatsaft, Mandarinensaft, Grapefruitsaft und Kombinationen davon.

5. Zusammensetzung nach einem der vorstehenden Ansprüche, wobei das Wunderfruchtfleischpulver 0,005 Gew.-% bis 0,2 Gew.-% der Zusammensetzung ausmacht.

6. Zusammensetzung nach Anspruch 5, wobei das Wunderfruchtfleischpulver 0,005 Gew.-% bis 0,01 Gew.-% der Zusammensetzung ausmacht.

7. Zusammensetzung nach Anspruch 5, wobei das Wunderfruchtfleischpulver 0,01 Gew.-% bis 0,2 Gew.-% der Zusammensetzung ausmacht.

8. Zusammensetzung nach Anspruch 7, wobei das Wunderfruchtfleischpulver 0,025 Gew.-% bis 0,05 Gew.-% der Zusammensetzung ausmacht.

9. Verfahren zum Herstellen eines mit Stevia gesüßten Wunderfruchtgetränks, wobei das Verfahren umfasst:
Bereitstellen eines Getränks;
Bereitstellen von Wunderfruchtfleischpulver;
Bereitstellen von Rebaudiosid A; und
Kombinieren des Getränks, Wunderfruchtfleischpulvers und Rebaudiosids A, um ein mit Stevia gesüßtes Wunderfruchtgetränk herzustellen,
wobei das Wunderfruchtfleischpulver 0,005 Gew.-% bis 2 Gew.-% der Zusammensetzung ausmacht.

10. Verfahren nach Anspruch 9, umfassend das Auflösen des Wunderfruchtfleischpulvers in Wasser vor dem Bereitstellen des Wunderfruchtfleischpulvers.

11. Verfahren nach Anspruch 9, wobei das Getränk ausgewählt ist aus Erfrischungsgetränk, aromatisiertem Wasser, Tee, Kaffee, Fruchtsaft und Kombinationen davon.

12. Verfahren nach einem der Ansprüche 9-11, wobei das Wunderfruchtfleischpulver 0,005 Gew.-% bis 0,2 Gew.-% der Zusammensetzung ausmacht.

13. Verfahren nach Anspruch 12, wobei das Wunderfruchtfleischpulver 0,005 Gew.-% bis 0,01 Gew.-% der Zusammensetzung ausmacht.

14. Verfahren nach Anspruch 12, wobei das Wunderfruchtfleischpulver 0,01 Gew.-% bis 0,2 Gew.-% der Zusammensetzung ausmacht.

15. Verfahren nach Anspruch 14, wobei das Wunderfruchtfleischpulver 0,025 Gew.-% bis 0,05 Gew.-% der Zusammensetzung ausmacht.

## Revendications

1. Composition comprenant :
du rébaudioside A ;
de la poudre de pulpe de fruit miracle ;
et une boisson,
la poudre de pulpe de fruit miracle représentant 0,005 % en poids à 2 % en poids de la composition.

2. Composition selon la revendication 1, la boisson étant choisie parmi un soda, de l'eau aromatisée, du thé et du café.

3. Composition selon la revendication 1, la boisson comprenant un jus de fruits.

4. Composition selon la revendication 3, le jus de fruits étant choisi parmi le jus d'orange, le jus de citron, le jus de limette, le jus de kumquat, le jus de mandarine, le jus de pamplemousse et des combinaisons correspondantes.

5. Composition selon l'une quelconque des revendications précédentes, la poudre de pulpe de fruit miracle représentant 0,005 % en poids à 0,2 % en poids de la composition.

6. Composition selon la revendication 5, la poudre de pulpe de fruit miracle représentant 0,005 % en poids à 0,01 % en poids de la composition.

7. Composition selon la revendication 5, la poudre de pulpe de fruit miracle représentant 0,01 % en poids à 0,2 % en poids de la composition.

8. Composition selon la revendication 7, la poudre de pulpe de fruit miracle représentant 0,025 % en poids à 0,05 % en poids de la composition.

9. Procédé de préparation d'une boisson au fruit miracle édulcorée au stévia, le procédé comprenant :
la fourniture d'une boisson ;
la fourniture de poudre de pulpe de fruit miracle ;
la fourniture de rébaudioside A ; et
la combinaison de la boisson, de la poudre de pulpe de fruit miracle et de rébaudioside A pour produire une boisson au fruit miracle édulcorée au stévia,
la poudre de pulpe de fruit miracle représentant 0,005 % en poids à 2 % en poids de la composition.

10. Procédé selon la revendication 9 comprenant la dissolution de la poudre de pulpe de fruit miracle dans de l'eau avant la fourniture de la poudre de pulpe de fruit miracle.

11. Procédé selon la revendication 9, la boisson étant choisie parmi un soda, de l'eau aromatisée, du thé, du café, un jus de fruits et des combinaisons correspondantes.

12. Procédé selon l'une quelconque des revendications 9 à 11, la poudre de pulpe de fruit miracle représentant 0,005 % en poids à 0,2 % en poids de la composition.

13. Procédé selon la revendication 12, la poudre de pulpe de fruit miracle représentant 0,005 % en poids à 0,01 % en poids de la composition.

14. Procédé selon la revendication 12, la poudre de pulpe de fruit miracle représentant 0,01 % en poids à 0,2 % en poids de la composition.

15. Procédé selon la revendication 14, la poudre de pulpe de fruit miracle représentant 0,025 % en poids à 0,05 % en poids de la composition.
